# EUROPÄISCHE PATENTANMELDUNG

(11) **EP 0 654 241 A1**
(43) Veröffentlichungstag der Anmeldung: **24.05.1995**
(21) Anmeldenummer: 94118045.7
(22) Anmeldetag: 15.11.1994
(51) Int. Cl.: A47J 43/28

(54) **Vorrichtung zum Abscheiden von Ölen, Fetten und dergleichen**

(30) Priorität: 16.11.1993 DE 4339173; 09.02.1994 DE 9402181 U
(71) Anmelder: Schlottmann, Roberto F.B., Boulogne (1609) Prov., Buenos Aires (AR)
(72) Erfinder: Schlottmann, Roberto F.B., Boulogne (1609) Prov., Buenos Aires (AR)
(74) Vertreter: Müller-Boré & Partner Patentanwälte

(57) **Zusammenfassung**

Gezeigt wird eine Vorrichtung zum Abscheiden von Ölen, Fetten und dergleichen von einer Flüssigkeitsoberfläche mit
einem Flüssigkeitsaufnahmebehälter (11), der in seiner Bodenwandung (12) mindestens eine Bodenöffnung (15, 16) aufweist,
einer gegenüber der Bodenwandung (12) drehbaren Verschlußscheibe (13), mit der die Bodenöffnung (15, 16) in einer Schließstellung verschließbar ist, wobei die Verschlußscheibe (13) mindestens eine Flüssigkeitsdurchtrittsöffnung (26, 27) aufweist, die zur Erzielung einer Offenstellung in Überdeckung mit der Bodenöffnung (15, 16) bringbar ist, und
einer Betätigungseinrichtung (14), mit der die Verschlußscheibe (13) von der Oberseite des Flüssigkeitsaufnahmebehälters (11) her gegenüber dessen Bodenwandung (12) verdrehbar ist.

## Beschreibung

Die vorliegende Erfindung betrifft eine Vorrichtung zum Abscheiden von Ölen, Fetten und dergleichen von einer Flüssigkeitsoberfläche mit einem Flüssigkeitsaufnahmebehälter, der in seiner Bodenwandung mindestens eine Bodenöffnung aufweist, einer gegenüber der Bodenwandung drehbaren Verschlußscheibe, mit der die Bodenöffnung in einer Schließstellung verschließbar ist, wobei die Verschlußscheibe mindestens eine Flüssigkeitsdurchtrittsöffnung aufweist, die zur Erzielung einer Offenstellung in Überdeckung mit der Bodenöffnung bringbar ist, und einer Betätigungseinrichtung, mit der die Verschlußscheibe von der Oberseite des Flüssigkeitsaufnahmebehälters her gegenüber dessen Bodenwandung verdrehbar ist.

Bei der Zubereitung von Speisen, wie Soßen, Suppen, Brühen und ähnliche flüssige Gerichte, erweist es sich häufig als notwendig, Fettschichten, die sich bevorzugt an der Oberfläche der genannten Speisen ansammeln, abzuscheiden, um den Fettgehalt zu reduzieren oder auch das abgeschiedene oder abgeschöpfte Fett für anderweitige Zwecke verwenden zu können. In der Praxis ist ein solcher Abscheidevorgang häufig mit umständlichen und im Falle von heißen Speisen auch gefährlichen Improvisationen verbunden, die zudem oftmals nur zu wenig befriedigenden Ergebnissen führen. So ist es beispielsweise bekannt, das an der Oberfläche der Speisen angesammelte Fett mit einem Löffel oder einer Kelle abzuschöpfen oder auch die Fettschicht abzugießen. Besonders bei dem letztgenannten Verfahren läßt es sich nicht vermeiden, daß neben der Fettschicht auch ein Teil der übrigen Flüssigkeit mit entfernt wird.

Der vorliegenden Erfindung liegt die Aufgabe zugrunde, eine Vorrichtung zu schaffen, mit der Öle oder Fette wirkungsvoll von Flüssigkeitsoberflächen abgeschieden werden können, und die zudem eine einfache und sichere Bedienung ermöglicht.

Zur Lösung dieser Aufgabe weist die erfindungsgemäße Vorrichtung die Merkmale des Anspruchs 1 auf.

Die erfindungsgemäße Vorrichtung zum Abscheiden von Ölen, Fetten und dergleichen von einer Flüssigkeitsoberfläche ist mit einem Flüssigkeitsaufnahmebehälter versehen, der in seiner Bodenwandung mindestens eine Bodenöffnung aufweist. Darüber hinaus ist eine gegenüber der Bodenwandung drehbare Verschlußscheibe vorgesehen, mit der die Bodenöffnung in einer Schließstellung verschließbar ist, wobei die Verschlußscheibe mindestens eine Flüssigkeitsdurchtrittsöffnung aufweist, die zur Erzielung einer Offenstellung in Überdeckung mit der Bodenöffnung bringbar ist. Zudem ist eine Betätigungseinrichtung vorgesehen, mit der die Verschlußscheibe von der Oberseite des Flüssigkeitsaufnahmebehälters her gegenüber dessen Bodenwandung verdrehbar ist.

Die erfindungsgemäße Vorrichtung kann in Offenstellung der Scheibe in die Flüssigkeit abgesenkt werden, so daß durch die Flüssigkeitsdurchtrittsöffnung in der Scheibe und die hierzu in Überdeckung gebrachte Bodenöffnung in der Bodenwandung die die Fettschicht aufweisende Flüssigkeit in das Innere des Flüssigkeitsaufnahmebehälters einströmen kann. Nach Überführung der Scheibe in Schließstellung kann der Flüssigkeitsaufnahmebehälter zusammen mit der darin aufgenommenen Flüssigkeit wieder aus der Flüssigkeit herausgenommen werden, um dann den eigentlichen Abscheidevorgang dadurch auszuführen, daß die Scheibe durch nochmalige Betätigung der Betätigungseinrichtung in Offenstellung verbracht wird und die Flüssigkeit bis auf die Fettschicht aus dem Flüssigkeitsaufnahmebehälter abgelassen wird.

Die erfindungsgemäße Vorrichtung ermöglicht somit eine Betätigung, die sicherstellt, daß lediglich der gewünschte Fettanteil aus der Flüssigkeit entnommen wird. Dadurch, daß die Betätigung der Scheibe mittels der Betätigungseinrichtung von der Oberseite des Flüssigkeitsaufnahmebehälters her erfolgt, ist stets ein ausreichender Abstand zur Flüssigkeitsoberfläche hin gegeben, so daß auch bei heißen, fetthaltigen Flüssigkeiten nicht die Gefahr eines Verbrühens besteht.

Bei einer bevorzugten Ausführungsform der erfindungsgemäßen Vorrichtung weist die Betätigungseinrichtung eine Betätigungsstange auf mit einem Betätigungsende zur manuellen Drehung der Betätigungsstange und einem Verbindungsende zur drehstarren Verbindung mit der Verschlußscheibe. Neben der einfachen und sicheren manuellen Betätigung der Betätigungseinrichtung ermöglicht die Betätigungsstange gleichzeitig die Ausübung eines Drucks auf den Behälter bzw. auf dessen Bodenwandung um den Behälter zur Entnahme von Fett oder Öl mit seiner Bodenwandung unter die Flüssigkeitsoberfläche drücken zu können.

Vorzugsweise ist die Verbindung der Betätigungsstange mit der Verschlußscheibe lösbar ausgeführt, derart, daß die Betätigungsstange innenseitig und die Scheibe außenseitig an der Bodenwandung anliegt, wobei ein Verbindungselement von außen durch die Scheibe und eine Verbindungsöffnung in der Bodenwandung in das Verbindungsende der Betätigungsstange einführbar ist. Dieser Aufbau der lösbaren Verbindung ermöglicht eine einfache Demontage und Montage der Betätigungseinrichtung am Flüssigkeitsaufnahmebehälter, so daß die Reinigung des Behälters besonders leichtgemacht wird. Wenn die lösbare Verbindung als Schraubverbindung, also unter Verwendung einer Verbindungsschraube als Verbindungselement ausgeführt wird, ist es besonders leicht möglich, die zur Abdichtung der Verschlußscheibe gegenüber der Behälterbodenwandung notwendige Scheibenanpresskraft dosiert einzustellen.

Um eine derartige Abdichtung auch unabhängig von den für die Verschlußscheibe und den Behälter verwendeten Materialien sicherstellen zu können, kann zwischen der Scheibe und der Bodenwandung eine Kunststoffdichtung vorgesehen werden, so daß auch bei Materialpaarungen wie Stahl/Stahl eine gute Dichtwirkung zwischen der Scheibe und der Bodenwandung erzielbar ist. Hierbei erweist sich die Verwendung von Kunststoffdichtungen aus PTFE als besonders vorteilhaft.

Alternativ oder zusätzlich zu der genannten Abdichtung zwischen der Bodenwandung und der Verschlußscheibe kann eine Dichtung zwischen der Bodenwandung und dem Verbindungsende der Betätigungsstange vorgesehen werden.

In dem Fall, daß eine Dichtung zwischen der Bodenwandung und der Verschlußscheibe vorgesehen wird, kann eine besonders gute Dichtwirkung dadurch erzielt werden, daß in Übereinstimmung mit der Scheibe die Dichtung mit mindestens einer Flüssigkeitsdurchtrittsöffnung versehen ist und drehstarr mit der Scheibe oder der Bodenwandung verbunden ist. Hierdurch wird sichergestellt, daß die Dichtung gegenüber der Verschlußscheibe oder der Bodenwandung nicht "wandern" kann, so daß trotz optimaler Dichtwirkung stets sichergestellt ist, daß in Offenstellung ein ungehinderter Durchgang von Flüssigkeit durch die Flüssigkeitsdurchtrittsöffnungen möglich ist.

Eine besonders sichere Funktion der erfindungsgemäßen Vorrichtung kann dadurch gewährleistet werden, daß die Betätigungseinrichtung mit einer Seitenabstützung versehen ist, die sich von der Betätigungsstange seitlich zum oberen Behälterrand hin erstreckt, wobei die Betätigungsstange drehbar mit einem Ende der Seitenabstützung verbunden ist und deren anderes Ende (Befestigungsende) am Behälterrand befestigt ist. Durch die genannte Seitenabstützung wird verhindert, daß die Betätigungsstange aus ihrer gegenüber der Bodenwandung des Behälters rechtwinkligen Betriebsstellung abgekippt wird, was zu einer Beeinträchtigung der Abdichtung der Verschlußscheibe gegenüber der Bodenwandung des Behälters führen würde.

Es besteht auch die vorteilhafte Möglichkeit, das Befestigungsende der Seitenabstützung mit einem Griffstück zu versehen, das unter Zwischenlage des Behälterrandes mit der Seitenabstützung, etwa durch eine Verschraubung, verbunden ist. Hierdurch ist zum einen eine sichere und schnell lösbare Verbindung der Seitenabstützung mit dem Behälterrand gegeben. Zum anderen läßt sich durch die Ausgestaltung des Befestigungsendes als Griffstück die Handhabung der erfindungsgemäßen Vorrichtung noch weiter vereinfachen.

Von der Vielzahl von Gestaltungen, die für die Bodenöffnung(en) bzw. die Flüssigkeitsdurchtrittsöffnung(en) möglich sind, erweist sich eine langlochartige Gestaltung mit Längsrändern, deren Konturen Radien aufweisen, die konzentrisch zur Achse der Betätigungsstange sind, als besonders vorteilhaft. Hierdurch ist nämlich ein linearer, direkt proportionaler Zusammenhang zwischen der Vergrößerung eines Öffnungswinkels der Flüssigkeitsdurchtrittsöffnungen und der aus diesen austretenden bzw. in diese eintretenden Flüssigkeitsmenge gegeben. Somit läßt sich die Durchtrittsmenge genau einstellen.

Nachfolgend wird anhand der Zeichnungen eine bevorzugte Ausführungsform der erfindungsgemäßen Vorrichtung näher erläutert. Es zeigen:
**Fig. 1** eine perspektivische Gesamtdarstellung einer Ausführungsform der erfindungsgemäßen Vorrichtung;
**Fig. 2** eine Teilschnittdarstellung der in **Fig. 1** dargestellten Vorrichtung;
**Fig. 3** eine Draufsicht auf eine Bodenwandung der erfindungsgemäßen Vorrichtung in einer Offenstellung; und
**Fig. 4** eine Draufsicht auf die Bodenwandung in einer Schließstellung.

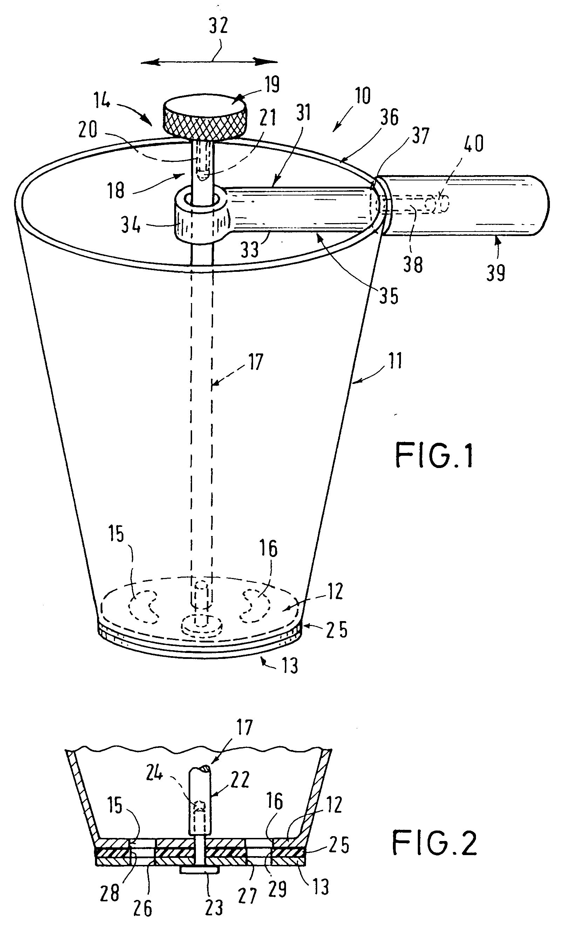

**Fig. 1** zeigt eine Abscheidevorrichtung 10 mit einem Flüssigkeitsaufnahmebehälter 11, der an seiner Bodenwandung 12 mit einer Verschlußscheibe 13 versehen ist, die über eine Betätigungseinrichtung 14 gegenüber der Bodenwandung 12 zur Freigabe oder zum Verschließen von Bodenöffnungen 15, 16 verdrehbar ist.

Die Betätigungseinrichtung 14 weist eine Betätigungsstange 17 auf, die an einem oberen Betätigungsende 18 mit einem Stellrad 19 versehen ist, das über einen Gewindezapfen 20, der in ein Innengewinde 21 des Betätigungsendes 18 eingeschraubt ist, mit der Betätigungsstange 17 drehstarr verbunden ist.

Wie aus **Fig. 2** zu ersehen ist, liegt die Betätigungsstange 17 mit ihrem unteren Verbindungsende 22 an der Bodenwandung 12 innenseitig an und ist über eine Verbindungsschraube 23, die in ein Innengewinde 24 des Verbindungsendes 22 eingeschraubt ist, drehstarr mit der außenseitig an der Bodenwandung 12 anliegenden Verschlußscheibe 13 verbunden. Zwischenliegend zwischen der Bodenwandung 12 und der Verschlußscheibe 13 ist eine Dichtung 25 vorgesehen.

Weiterhin ist aus **Fig. 2** zu ersehen, daß die Verschlußscheibe 13 mit Flüssigkeitsdurchtrittsöffnungen 26, 27 versehen ist, die mit Flüssigkeitsdurchtrittsöffnungen 28, 29 der Dichtung 25 fluchten, wobei sich die Verschlußscheibe 13 mit der darauf etwa durch Klebung befestigten Dichtung 25 in einer derartigen Relativstellung gegenüber der Bodenwandung 12 befindet, daß die genannten Flüssigkeitsdurchtrittsöffnungen 26 bis 29 mit den entsprechenden Bodenöffnungen 15, 16 fluchten. In dieser Stellung befindet sich die Abscheidevorrichtung 10 in ihrer Offenstellung.

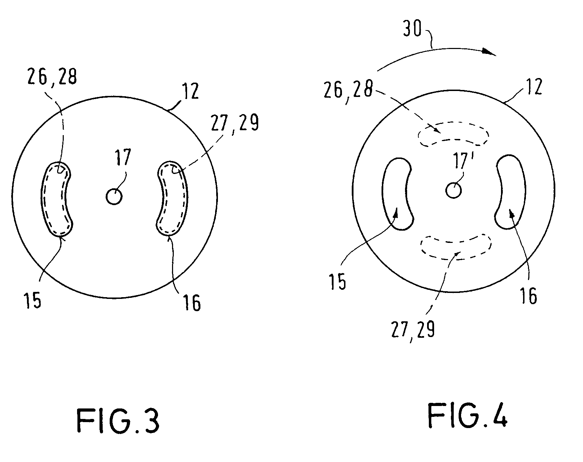

In der **Fig. 3** bzw. **Fig. 4** ist die Offenstellung bzw. Schließstellung der Abscheidevorrichtung 10 in einer Draufsicht der Bodenwandung 12 dargestellt.

**Fig. 3** zeigt übereinstimmend mit **Fig. 2** die mit den Bodenöffnungen 15, 16 fluchtende Ausrichtung der Flüssigkeitsdurchtrittsöffnungen 26, 27 und 28, 29 in der Offenstellung. Aus Gründen der besseren Darstellbarkeit sind die Flüssigkeitsdurchtrittsöffnungen 26, 27 bzw. 28, 29 in **Fig. 3** etwas kleiner dargestellt als die Bodenöffnungen 15, 16, obwohl sie tatsächlich in der Größe mit diesen übereinstimmen (siehe **Fig. 2**).

**Fig. 4** zeigt, wie sich infolge einer Drehung des Stellrads 19 (**Fig. 1**) und somit der Betätigungsstange 17 in Richtung des Pfeils 30 um 90° eine entsprechende Drehverlagerung der Flüssigkeitsdurchtrittsöffnungen 26, 27 bzw. 28, 29 gegenüber den Bodenöffnungen 15 bzw. 16 ergibt und sich demzufolge die Abscheidevorrichtung 10 in einer Schließstellung befindet. Diese Schließstellung ist nicht an eine Drehverlagerung bestimmter Größe gebunden, vielmehr ist es schon ausreichend, wenn sich die Flüssigkeitsdurchtrittsöffnungen 26 bis 29 nicht mehr in Überdeckung mit den Bodenöffnungen 15 bis 16 befinden. Ferner ist eine mittlere Öffnung 17' gezeigt, durch die die Verbindungsschraube 23 hindurchgreift.

Aus **Fig. 1** geht hervor, daß die Betätigungseinrichtung 14 mit einer Seitenabstützung 31 versehen werden kann, die für eine laterale Sicherung der Betätigungseinrichtung 14 sorgt und somit verhindert, daß die Betätigungsstange 17 der Betätigungseinrichtung 14 in Richtung des Pfeils 32 abkippen kann.

Die Seitenabstützung 31 weist eine Stützstange 33 auf, die an einem Ende zur Verbindung mit der Betätigungsstange 17 mit einem Auge 34 versehen ist, durch das die Betätigungsstange 17 hindurchgeführt ist und in dem die Betätigungsstange 17 gegenüber der Stützstange 33 drehbar gehalten ist. Das gegenüberliegende Ende der Stützstange 33 ist als Befestigungsende 35 ausgeführt und am oberen Behälterrand 36 in einer Randkerbe 37 gesichert. Hierzu ist das Befestigungsende 35 mit einem davon abgehenden Gewindezapfen 38 in die Randkerbe 37 eingelegt und ein Griffstück 39, das ein Innengewinde 40 aufweist, ist von außerhalb des Behälterrandes 36 auf den Gewindezapfen 38 aufgeschraubt, derart, daß der Behälterrand 36 geklemmt zwischen der Stützstange 33 und dem Griffstück 39 aufgenommen wird.

Neben der vorbeschriebenen Kippsicherung für die Betätigungseinrichtung 14 bzw. deren Betätigungsstange sorgt die Seitenabstützung 31 durch das Griffstück 39 für eine vereinfachte Handhabung der Abscheidevorrichtung 10. So ist es möglich, daß der Flüssigkeitsaufnahmebehälter 11 beim Eintauchen in oder Entnehmen aus einer Flüssigkeit, deren Fett- oder Ölschicht abgeschöpft werden soll, mit einer Hand am Griffstück 39 gehalten wird, während mit der anderen Hand das Stellrad 19 zur vorbeschriebenen Betätigung der Verschlußscheibe 13 zum Öffnen und Schließen der Abscheidevorrichtung 10 verdreht werden kann.

## Patentansprüche

1. Vorrichtung zum Abscheiden von Ölen, Fetten und dergleichen von einer Flüssigkeitsoberfläche mit
einem Flüssigkeitsaufnahmebehälter (11), der in seiner Bodenwandung (12) mindestens eine Bodenöffnung (15, 16) aufweist,
einer gegenüber der Bodenwandung (12) drehbaren Verschlußscheibe (13), mit der die Bodenöffnung (15, 16) in einer Schließstellung verschließbar ist, wobei die Verschlußscheibe (13) mindestens eine Flüssigkeitsdurchtrittsöffnung (26, 27) aufweist, die zur Erzielung einer Offenstellung in Überdeckung mit der Bodenöffnung (15, 16) bringbar ist, und
einer Betätigungseinrichtung (14), mit der die Verschlußscheibe (13) von der Oberseite des Flüssigkeitsaufnahmebehälters (11) her gegenüber dessen Bodenwandung (12) verdrehbar ist.

2. Vorrichtung nach Anspruch 1, **dadurch gekennzeichnet,** daß die Betätigungseinrichtung (14) eine Betätigungsstange (17) mit einem Betätigungsende (18) zur manuellen Drehung der Betätigungsstange (17) und ein Verbindungsende (22) zur dreh-starren Verbindung mit der Verschlußscheibe (13) aufweist.

3. Vorrichtung nach Anspruch 2, **dadurch gekennzeichnet,** daß die Verbindung der Betätigungsstange (17) mit der Verschlußscheibe (13) lösbar ausgeführt ist, derart, daß die Betätigungsstange (17) innenseitig und die Verschlußscheibe (13) außenseitig an der Bodenwandung (12) anliegt, wobei ein vorzugsweise als Verbindungsschraube ausgeführtes Verbindungselement (23) von außen durch die Verschlußscheibe (13) und eine Verbindungsöffnung in der Bodenwandung (12) in das Verbindungsende (22) eingeführt ist.

4. Vorrichtung nach Anspruch 3, **dadurch gekennzeichnet,** daß zwischen dem Verbindungsende (22) der Betätigungsstange (17) und der Bodenwandung (12) und/oder der Verschlußscheibe (13) und der Bodenwandung (12) eine vorzugsweise aus PTFE gebildete Dichtung (25) vorgesehen ist.

5. Vorrichtung nach Anspruch 4, **dadurch gekennzeichnet,** daß die Dichtung (25) zwischen der Bodenwandung (12) und der Verschlußscheibe (13) in Übereinstimmung mit der Verschlußscheibe (13) mit mindestens einer Flüssigkeitsdurchtrittsöffnung (28, 29) versehen und drehstarr mit der Verschlußscheibe (13) oder der Bodenwandung (12) verbunden ist.

6. Vorrichtung nach einem oder mehreren der vorangehenden Ansprüche, **dadurch gekennzeichnet,** daß die Betätigungseinrichtung (14) mit einer Seitenabstützung (31) versehen ist, die sich von der Betätigungsstange (17) seitlich zum oberen Behälterrand (36) hin erstreckt, wobei die Betätigungsstange (17) drehbar mit einem Ende (34) der Seitenabstützung (31) verbunden ist und deren anderes Ende (Befestigungsende 35) am Behälterrand (36) befestigt ist.

7. Vorrichtung nach Anspruch 6, **dadurch gekennzeichnet,** daß das Befestigungsende (35) der Seitenabstützung (31) mit einem Griffstück (39) versehen ist, das unter Zwischenlage des Behälterrands (36) vorzugsweise durch eine Verschraubung (38, 40) mit der Seitenabstützung (31) verbunden ist.

8. Vorrichtung nach einem oder mehreren der vorangehenden Ansprüche, **dadurch gekennzeichnet,** daß die Bodenöffnung(en) (15, 16) bzw. die Flüssigkeitsdurchtrittsöffnung(en) (26, 27; 28, 29) langlochartig ausgebildet sind, mit Längsrändern, deren Konturen Radien aufweisen, die konzentrisch zur Achse der Betätigungsstange (17) sind.
